# EUROPÄISCHE PATENTSCHRIFT

(11) **EP 4 245 457 B1**
(45) Veröffentlichungstag und Bekanntmachung des Hinweises auf die Patenterteilung: **21.08.2024**
(21) Anmeldenummer: 23158789.0
(22) Anmeldetag: 27.02.2023
(51) Int. Cl.: B23P 19/06

(54) **HEBE- UND TRANSPORTVORRICHTUNG**
LIFTING AND TRANSPORTING DEVICE
DISPOSITIF DE LEVAGE ET DE TRANSPORT

(30) Priorität: 09.03.2022 DE 102022105559
(43) Veröffentlichungstag der Anmeldung: 20.09.2023
(73) Patentinhaber: Hohmann, Frank, 59581 Warstein (DE); Hohmann, Jörg, 59872 Meschede (DE)
(72) Erfinder: Hohmann, Frank, 59581 Warstein (DE); Hohmann, Jörg, 59872 Meschede (DE)
(74) Vertreter: Paustian, Othmar

(56) Entgegenhaltungen:
- EP-A1- 3 663 034
- EP-A1- 3 677 537
- EP-A2- 2 660 182
- JP-A- H08 122 479
- KR-A- 20130 026 039

## Beschreibung

Die Erfindung bezieht sich auf eine Hebe- und Transportvorrichtung gemäß dem Oberbegriff von Anspruch 1. EP2660182 A2 offenbart eine solche Hebe- und Transportvorrichtung.

Unter dem Vorspannen einer Schraubverbindung wird im Rahmen dieser Anmeldung sowohl ein reibungs- und torsionsfreies Vorspannen, bei dem ausschließlich eine Zugkraft auf den Schraubenbolzen aufgebracht und die Schraubenmutter anschließend beigedreht wird, als auch ein drehendes Vorspannen - z. B. nach dem Drehmoment- oder dem Drehwinkelverfahren - verstanden.

Dementsprechend werden im Rahmen dieser Anmeldung unter Schraubwerkzeugen sowohl Zug aufbringende Schraubwerkzeuge, z. B. Schraubenspannzylinder, als auch drehende Schraubwerkzeuge, z. B. Drehmomentschrauber oder Drehschrauber, verstanden, wobei die Schraubwerkzeuge automatische oder auch manuelle Schraubwerkzeuge sein können.

Ferner wird dementsprechend unter einer Schraubstellung eine Stellung bzw. Position eines Schraubwerkzeuges verstanden, in der es eine Schraubverbindung vorspannen kann.

Unter Lastraum wird im Rahmen dieser Anmeldung der von der anzuhebenden bzw. zu transportierenden Last eingenommene Raum verstanden.

Eine gattungsgemäße Hebe- und Transportvorrichtung ist aus der DE 10 2012 009 255 A1 bekannt. Mit einer solchen Vorrichtung können Schraubverbindungen in Flanschverbindungen vorgespannt werden. bei denen der Schraubenbolzen von unten durch die miteinander fluchtenden Durchgangsbohrungen in den miteinander zu verbindenden Bauteilen gesteckt wird, bis der Bolzenkopf an der Flansch-Unterseite der zu verbindenden Bauteile anliegt, und auf der Flansch-Oberseite auf das mit einem Gewinde versehene Bolzenende eine Mutter per Hand aufgeschraubt wird, bis sie an der Flansch-Oberseite anliegt. Ein Schraubwerkzeug ist über der Flansch-Oberseite in der Hebe- und Transportvorrichtung gehaltert und wird über der vorzuspannenden Schraubverbindung positioniert und dann auf diese abgesenkt. Nach erfolgtem Vorspannen der Schraubverbindung wird das Schraubwerkzeug mittels der Hebe- und Transportvorrichtung wieder angehoben und zur nächsten Schraubverbindung verschoben.

Aus der DE 10 2019 200 042 B3 ist ebenfalls eine gattungsgemäße Hebe- und Transportvorrichtung bekannt. Mit einer solchen Vorrichtung können Schraubverbindungen in Flanschverbindungen vorgespannt werden. bei denen der Schraubenbolzen von oben in die Durchgangsbohrungen der miteinander zu verbindenden Flansche gesteckt und die Muttern auf der Flansch-Unterseite von Hand auf die Schraubenbolzen aufgeschraubt werden.

Aufgabe der vorliegenden Erfindung ist es, eine Hebe- und Transportvorrichtung vorzuschlagen, mit der die Herstellung geschraubter Flanschverbindungen weiter vereinfacht werden kann.

Erfindungsgemäß wird diese Aufgabe bei einer Vorrichtung der eingangs genannten Art durch die kennzeichnenden Merkmale des Anspruchs 1 gelöst.

Durch die erfindungsgemäßen Maßnahmen können Werkzeuge zum Vorspannen von Schraubverbindungen bequem und schnell auch auf Schrägflanschen mit einer Schraubverbindung in Eingriff gebracht werden, und dies sowohl auf der Flansch-Oberseite als auch auf der Flansch-Unterseite.

Als Schrägflansche werden Flansche bezeichnet, deren Ober- und/oder Unterseite gegenüber der Horizontalen zur Flansch-Außenkante hin geneigt verlaufen, beispielweise bei einer horizontalen Trennfuge sich zur Flansch-Außenkante hin verjüngen. Die Schraubverbindungen verlaufen entweder senkrecht zur Flansch-Oberseite oder senkrecht zur Flansch-Unterseite und dementsprechend gegenüber der Vertikalen geneigt.

Dadurch, dass der Rahmen erfindungsgemäß zwei gelenkig miteinander verbundene Rahmenabschnitte aufweist, wobei die Gelenkachse in Transportrichtung verläuft, kann einer der Rahmenabschnitte so gegenüber dem anderen Rahmenabschnitt verschwenkt werden, dass ein auf dem einen Rahmenabschnitt zu diesem verschwenkfest gehaltertes Schraubwerkzeug auf die Längsachse der Schraubverbindung ausgerichtet werden kann, während sein Gewicht von dem anderen Rahmenabschnitt mittels des ersten Auflagers in die Flansch-Oberseite abgeleitet wird. Das ausgerichtete, geneigte Schraubwerkzeug kann auf diese Weise bequem durch Verschieben längs der geneigten Längsachse der Schraubverbindung mit dieser in Eingriff gebracht werden, dann zum Anziehen der Schraubverbindung betätigt werden und nach dem Anziehen durch Verschieben auch wieder von der Schraubverbindung getrennt und im geneigten Zustand zur nächsten Schraubverbindung weitergeschoben werden.

Bevorzugt weisen der erste und der zweite Rahmenabschnitt Arretierungselemente einer Arretierungsvorrichtung auf, mittels derer der zweite Rahmenabschnitt in mindestens einem gewünschten Verschwenkwinkel gegenüber dem ersten Rahmenabschnitt arretierbar ist. Hierdurch wird die Montage geneigter Schraubverbindungen erheblich erleichtert, da der Monteur zum einen keine Kraft mehr aufwenden muss, um das Schraubwerkzeug in der geneigten Ausrichtung zu halten, und zum anderen beide Hände frei hat, um die Hubeinrichtung und das Schraubwerkzeug zu bedienen und die Hebe- und Transportvorrichtung zur nächsten Schraubverbindung weiterzuschieben.

Der zweite Rahmenabschnitt kann dabei in mehreren definierten Winkeln oder stufenlos in einem vorgegebenen Winkelbereich verschwenkt und arretiert werden.

Vorteilhafterweise ist der erste Rahmenabschnitt dazu ausgelegt, sich längs der Flansch-Stirnseite zu erstrecken, und das zweite Auflager am ersten Rahmenabschnitt befestigt und zur Anlage an der Flansch-Unterseite ausgelegt. Mit diesen Maßnahmen wird sowohl die Kippstabilität der Hebe- und Transportvorrichtung verbessert als auch erreicht, dass die Hebe- und Transportvorrichtung ohne Umbauarbeiten für das Anziehen von Schraubverbindungen von der Flansch-Oberseite aus oder von der Flansch-Unterseite aus eingesetzt werden kann. Ein Kippmoment über die Flanschkante, also um eine Achse parallel zur Transportrichtung, wird durch die Reibkräfte in den Anlageflächen des ersten und des zweiten Auflagers an der Flansch-Oberseite und an der Flansch-Unterseite aufgenommen. Ferner kann durch Drehen der Hebe- und Transportvorrichtung um eine entsprechende horizontale Achse der zweite Rahmenabschnitt wahlweise oben oder unten über den ersten Rahmenabschnitt hinausragen und so ein im zweiten Rahmenabschnitt gehaltertes Schraubwerkzeug wahlweise Schraubverbindungen von der Flansch-Oberseite aus oder von der Flansch-Unterseite aus anziehen, wobei im letzteren Fall dann das ehemals zweite Auflager als erstes Auflager an der Flansch-Oberseite anliegt.

In günstiger Weiterbildung der Erfindung sind das erste und/oder das zweite Auflager zur Einstellung des gegenseitigen Abstands längs des ersten Rahmenabschnitts verschiebbar und mittels Feststelleinrichtungen fixierbar. Auf diese Weise kann die Hebe- und Transportvorrichtung schnell und einfach an unterschiedliche Flanschdicken angepasst werden

Vorzugsweise ist das zweite Auflager am zweiten Rahmenabschnitt befestigt und zur Anlage oberhalb der Schraubverbindung an eine vom Flansch aufgehende Bauteilwand ausgelegt. Durch diese Ausführungsform wird eine äußerst kompakte Ausbildung der Hebe- und Transportvorrichtung ermöglicht.

In einer weiteren bevorzugten, ebenfalls sehr kompakten Ausführungsform der Erfindung ist das zweite Auflager am zweiten Rahmenabschnitt befestigt und zum Übergreifen der Schraubverbindungen ausgelegt ist, die der in Bearbeitung befindlichen Schraubverbindung benachbart sind. Das zweite Auflager kann dabei als flaches Element zum Übergreifen in Form von Hintergreifen oder als U-förmiges Element zum Übergreifen in Form von Umschließen ausgebildet sein.

Denkbar ist auch, dass der erste Rahmenabschnitt dazu ausgelegt ist, sich längs der Flansch-Stirnseite zu erstrecken, und das erste Auflager längs des ersten Rahmenabschnitts von einer ersten Position, in der es angeordnet ist, wenn der zweite Rahmenabschnitt oberhalb der Flansch-Oberseite angeordnet ist, in eine zweite Position verschiebbar ist, in der es angeordnet ist, wenn der zweite Rahmenabschnitt unterhalb der Flansch-Unterseite angeordnet ist. Mit diesen Maßnahmen können die beiden vorgenannten Ausführungsformen auch eingesetzt werden, um Schraubverbindungen von der Flansch-Unterseite aus anzuziehen, wobei im Fall der zuerst genannten Ausführungsform das zweite Auflager zur Anlage unterhalb der Schraubverbindung an eine vom Flansch nach unten abgehende Bauteilwand ausgelegt ist.

Bevorzugt ist das erste Auflager dazu ausgelegt, auf einem horizontalen Flächenabschnitt der Flansch-Oberseite anzuliegen. Die konstruktive Ausbildung des ersten Auflagers wird so erheblich vereinfacht.

Falls das zweite Auflager zur Anlage an der Flansch-Unterseite vorgesehen ist, ist es vorzugsweise dazu ausgelegt ist, auf einem horizontalen Flächenabschnitt der Flansch-Unterseite anzuliegen. Hierdurch wird auch die konstruktive Ausbildung des zweiten Auflagers deutlich vereinfacht.

Dabei ist der horizontale Flächenabschnitt bevorzugt zwischen der Schraubverbindung und der Flansch-Außenkante angeordnet ist. Auf diese Weise wird das Anbringen und Entfernen der Hebe- und Transportvorrichtung an bzw. von dem Flansch, insbesondere das Anlegen des ersten und des zweiten Auflagers an die horizontalen Flächenabschnitte, beträchtlich vereinfacht.

In einer vorteilhaften Ausführungsform der Erfindung weist der erste Rahmenabschnitt Führungsbolzen auf, die dazu eingerichtet sind, in Führungsnuten einzugreifen, die an der Flansch-Oberseite und/oder an der Flansch-Unterseite in Transportrichtung verlaufen. Die Größe der aufnehmbaren Horizontalkräfte und damit die Kippstabilität kann so erheblich erhöht werden.

Diese Führungsnuten können beispielsweise in Führungsschienen ausgebildet sein, die an der Flansch-Oberseite und/oder an der Flansch-Unterseite angebracht sind, oder in die Flansch-Oberseite und/oder in die Flansch-Unterseite eingearbeitet sein.

Vorzugsweise ist die Hubeinrichtung am zweiten Rahmenabschnitt befestigt. Die konstruktive Ausbildung ihrer Befestigung wird auf diese Weise vereinfacht, da lediglich die Verschieblichkeit in Hubrichtung berücksichtigt werden muss. Andernfalls müsste die Befestigung der Hubeinrichtung wegen der Verschwenkbarkeit des beiden Rahmenabschnitte zueinander auch noch drehbeweglich ausgebildet werden.

Die Erfindung wird nachfolgend anhand der Zeichnungen beispielshalber noch näher erläutert. Es zeigen:
- Figur 1a: in einer Perspektivansicht eine erste Ausführungsform einer erfindungsgemäßen Hebe- und Transportvorrichtung;
- Figur 1b: in einer Perspektivansicht die Hebe- und Transportvorrichtung aus Figur 1a, eingesetzt beim Herstellen einer geschraubten Schrägflanschverbindung;
- Figur 2a: in einer Perspektivansicht eine zweite Ausführungsform einer erfindungsgemäßen Hebe- und Transportvorrichtung;
- Figur 2b: in einer Perspektivansicht die Hebe- und Transportvorrichtung aus Figur 2a, eingesetzt beim Herstellen einer geschraubten Schrägflanschverbindung;
- Figur 2c: in einer Seitenansicht die Hebe- und Transportvorrichtung aus Figur 2a mit einem gehalterten Schraubwerkzeug, eingesetzt beim Herstellen einer geschraubten Schrägflanschverbindung gemäß Figur 2b;
- Figur 2d: eine Schnittansicht längs Linie A-A in Figur 2c;
- Figur 3a: in einer Perspektivansicht eine dritte Ausführungsform einer erfindungsgemäßen Hebe- und Transportvorrichtung;
- Figur 3b: in einer Perspektivansicht die Hebe- und Transportvorrichtung aus Figur 3a, eingesetzt beim Herstellen einer geschraubten Schrägflanschverbindung;
- Figur 4a: in einer Perspektivansicht eine vierte Ausführungsform einer erfindungsgemäßen Hebe- und Transportvorrichtung;
- Figur 4b: in einer Perspektivansicht die Hebe- und Transportvorrichtung aus Figur 4a, eingesetzt beim Herstellen einer geschraubten Schrägflanschverbindung.

Die in den Figuren dargestellten Ausführungsformen einer erfindungsgemäßen Hebe- und Transportvorrichtung 1 weist einen Rahmen 2, eine Halterungseinrichtung 3, eine Hubeinrichtung 4 sowie erste und zweite Auflager 5, 6 auf. Die Heberichtung ist mit 7 und die Transportrichtung mit 8 bezeichnet.

Der Rahmen 2 weist einen ersten und einen zweiten Rahmenabschnitt 9, 10 auf, die gelenkig miteinander verbunden sind. Die Gelenkachse ist eine Verschwenkachse 11, um die die beiden Rahmenabschnitte 9, 10 gegeneinander verschwenkbar sind. Im an einem Flansch 12 montierten Zustand der Hebe- und Transportvorrichtung 1 erstreckt sich die Verschwenkachse 11 in Transportrichtung 8. Unter der Bezeichnung "Flansch 12" wird hier eine Flanschverbindung bzw. -paarung mit einem oberen Flansch 12a und einem unteren Flansch 12b verstanden. Dabei kann der Flansch 12 geradlinig oder ringförmig in Form eines Innen- oder Außenrings ausgeführt sein.

Jeder Rahmenabschnitt 9, 10 ist aus zwei Rahmenteilen 13, 14; 15, 16 gebildet, die in Transportrichtung 8 vor und hinter einem Lastraum 17, der zur Aufnahme eines Schraubwerkzeuges 18 ausgelegt ist, angeordnet sind.

Die beiden Rahmenteile 13, 14 des ersten Rahmenabschnitts 9 sind länglich ausgebildet und dazu ausgelegt, sich senkrecht zur Transportrichtung 8 von der Flansch-Oberseite 19 aus längs der Flansch-Stirnseite 20 bis unter die Flansch-Unterseite 21 zu erstrecken. Sie sind durch zwei in Transportrichtung 8 verlaufende Querriegel 22, 23 verformungssteif miteinander verbunden, wobei die Querriegel 22, 23 an den Rahmenteilen 13, 14 in Längsrichtung der Rahmenteile 13,14 verschieblich angebracht sind. Dazu sind in den Rahmenteilen 13, 14 Längsschlitze 24 ausgebildet, in denen die Querriegel 22, 23 gelagert sind. Mittels Feststelleinrichtungen 25 können die Querriegel 22, 23 in ihrer gewünschten Position in den Längsschlitzen 24 fixiert werden.

An einem ersten Querriegel 22 ist das erste Auflager 5 angebracht. Es ist aus zwei Auflagerrollen 5a gebildet, die in Transportrichtung 8 zueinander einen Abstand aufweisen und im an einem Flansch 12 montierten Zustand der Hebe- und Transportvorrichtung 1 auf der Flansch-Oberseite 19 aufliegen. Im dargestellten Ausführungsbeispiel sind die Auflagerrollen 5a dazu ausgelegt, auf einem horizontalen Flächenabschnitt 26 der Flansch-Oberseite 19 aufzuliegen und auf diesem in Transportrichtung 8 abzurollen.

Am zweiten Querriegel 23 ist das zweite Auflager 6 angebracht. Es ist ebenfalls aus zwei Auflagerrollen 6a gebildet, die in Transportrichtung 8 zueinander einen Abstand aufweisen. Im an einem Flansch 12 montierten Zustand der Hebe- und Transportvorrichtung 1 liegen die Auflagerrollen 6a an der Flansch-Unterseite 21 an. Auch diese Auflagerrollen 6a sind im dargestellten Ausführungsbeispiel dazu ausgelegt, an einem horizontalen Flächenabschnitt 27 der Flansch-Unterseite 21 anzuliegen und auf diesem in Transportrichtung 8 abzurollen.

Die horizontalen Flächenabschnitte 26, 27 sind zwischen der Schraubverbindung 28 und der Flansch-Außenkante 29 angeordnet.

Da die Querriegel 22, 23 an den Rahmenteilen 13, 14 in Längsrichtung der Rahmenteile 13, 14 verschieblich angebracht sind, können durch Verschieben der Querriegel 22, 23 die Auflagerrollen 5a, 6a zur Anlage an der Flansch-Oberseite 19 bzw. -Unterseite 21 gebracht werden und kann auch der Anlagedruck der Auflagerrollen 5a, 6a eingestellt werden. Zudem kann durch gemeinsames Verschieben der Querriegel 22, 23 in dieselbe Richtung die Längsachse 30 eines im zweiten Rahmenabschnitt 10 gehalterten Schraubwerkzeugs 18 -wenn diese Längsachse 30 zwar parallel zur Längsachse 31 der Schraubverbindung 28 verläuft, aber nicht in dieser Längsachse 31- in Form einer Parallelverschiebung in die Längsachse 31 der Schraubverbindung 28 verschoben werden. Denkbar ist auch, dass die Querriegel 22, 23 quer zur Längsrichtung der Rahmenteile 13, 14 und dabei quer zur Transportrichtung 8 verschiebbar sind, also im an einem Flansch 12 montierten Zustand der Hebe- und Transportvorrichtung 1 horizontal zur Transportrichtung 8 verschiebbar sind.

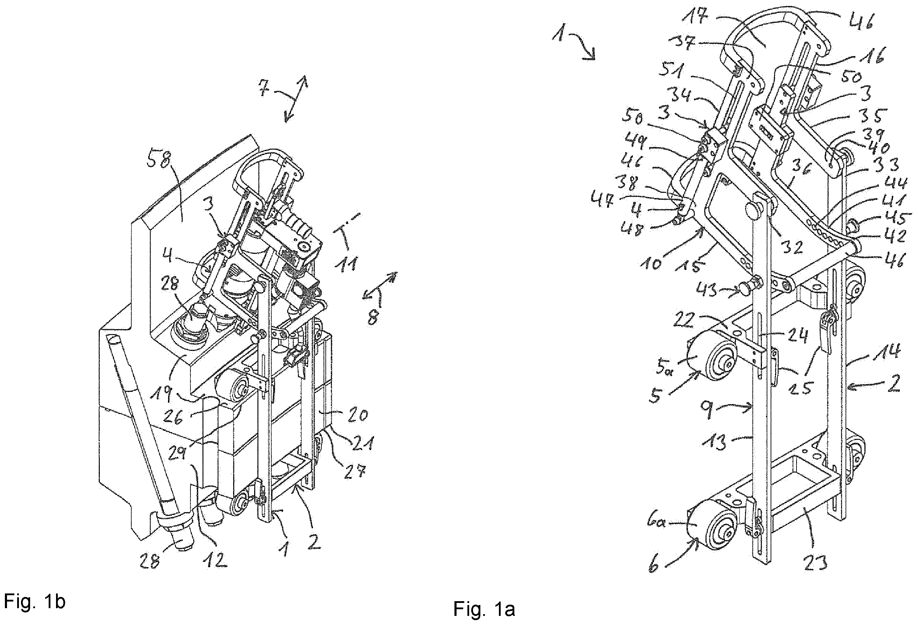

Am in den Figuren 1a und 1b oberen Ende 32, 33 der Rahmenteile 13, 14 des ersten Rahmenabschnitts 9 ist der zweite Rahmenabschnitt 10 gelenkig angebracht. Dabei ist jedes Rahmenteil 15, 16 des zweiten Rahmenabschnitts 10 an einem Rahmenteil 13, 14 des ersten Rahmenabschnitts 9 um die Verschwenkachse 11 verschwenkbar befestigt.

Die beiden Rahmenteile 15, 16 des zweiten Rahmenabschnitts 10 weisen jeweils in etwa die Form eines auf dem Kopf stehenden F mit jeweils einen Längssteg 34 und zwei mit diesem biegesteif verbundenen und zu diesem querverlaufenden Querschenkeln 35, 36 auf. Die ersten, zwischen den beiden Enden 37, 38 des Längssteges 34 angeordneten Querschenkel 35 bilden jeweils mit ihrem freien Ende 39 die Gelenkverbindung 40 mit einem Rahmenteil 13, 14 des ersten Rahmenabschnitts 9 aus, wobei die beiden Gelenkverbindungen 40 auf der Verschwenkachse 11 liegen.

Die zweiten Querschenkel 36 sind jeweils an dem Ende 38 des Längsstegs 34 angeordnet, das dem ersten Rahmenabschnitt 9 zugewandt ist. Der Endbereich 41 der zweiten Querschenkel 36 ist jeweils nahe deren freien Ende 42 gekrümmt, wobei die Verschwenkachse 11 die Krümmungsachse bildet bzw. die Gelenkpunkte der Gelenkverbindungen 40 zwischen erstem und zweitem Rahmenabschnitt 9, 10 die Krümmungsmittelpunkte bilden.

Zur Ausbildung einer Arretierungsvorrichtung 43 sind in beiden gekrümmten Endbereichen 41 Bohrungen 44 ausgebildet, die jeweils mit einem Arretierungsbolzen 45 in den beiden Rahmenteilen 13, 14 des ersten Rahmenabschnitts 9 zusammenwirken, um den zweiten Rahmenabschnitt 10 in einem gewünschten Verschwenkwinkel zum ersten Rahmenabschnitt 9 zu arretieren. Bei Arretierung in der letzten Bohrung Richtung Längssteg 34 beträgt dieser Verschwenkwinkel 0°.

Die beiden Rahmenteile 15, 16 des zweiten Rahmenabschnitts 10 sind durch drei in Transportrichtung 8 verlaufende Querriegel 46 verformungssteif miteinander verbunden. Dabei sind jeweils die Enden 37, 38 der beiden Längsstege 34 sowie die freien Enden 42 der zweiten Querschenkel 36 durch Querriegel 46 miteinander verbunden. Die zwischen den Längsstegen 34 verlaufenden Querriegel 46 sind zur Aufnahme des Schraubwerkzeuges 18 entsprechend geformt, im vorliegenden Fall ausgebaucht hin zur den Querschenkeln 35, 36 abgewandten Seite.

An den Längsstegen 34 ist die Hubeinrichtung 4 befestigt. Im dargestellten Ausführungsbeispiel weist sie an jedem Längssteg 34 eine Gasdruckfeder 47 auf, deren erstes Ende 48 jeweils nahe dem zweiten Querschenkel 36 unverschieblich befestigt ist und deren zweites Ende 49 jeweils mit einem Halterungselement 50 verbunden ist, das in einem im Längssteg 34 ausgebildeten Längsschlitz 51 längsverschieblich gelagert ist und die beide gemeinsam die Halterungseinrichtung 3 zur Halterung eines Schraubwerkzeuges 18 ausbilden. Mit Hilfe der Gasdruckfedern 47 wird das Schraubwerkzeug 18 nach dem Anziehen/Lösen der Schraubverbindung 28 entgegen der Schwerkraft nach oben gedrückt. Das Schraubwerkzeug 18 ist mit den Halterungselementen 50 unverschieblich und drehfest, also auch verschwenkfest, verbunden. Es kann beispielsweise mit den Halterungselementen 50 verschraubt oder von diesen magnetisch oder formschlüssig (z. B. mittels Rastbolzen) gehaltert werden. Die Halterungselemente 50 sind ihrerseits in den Längsschlitzen 51 verschwenkfest gegenüber dem zweiten Rahmenabschnitt 10 geführt, so dass mit einem Verschwenken des zweiten Rahmenabschnitts 10 gegenüber dem ersten Rahmenabschnitt 9 das Schraubwerkzeug 18 um denselben Winkel gegenüber dem ersten Rahmenabschnitt 9 verschwenkt wird.

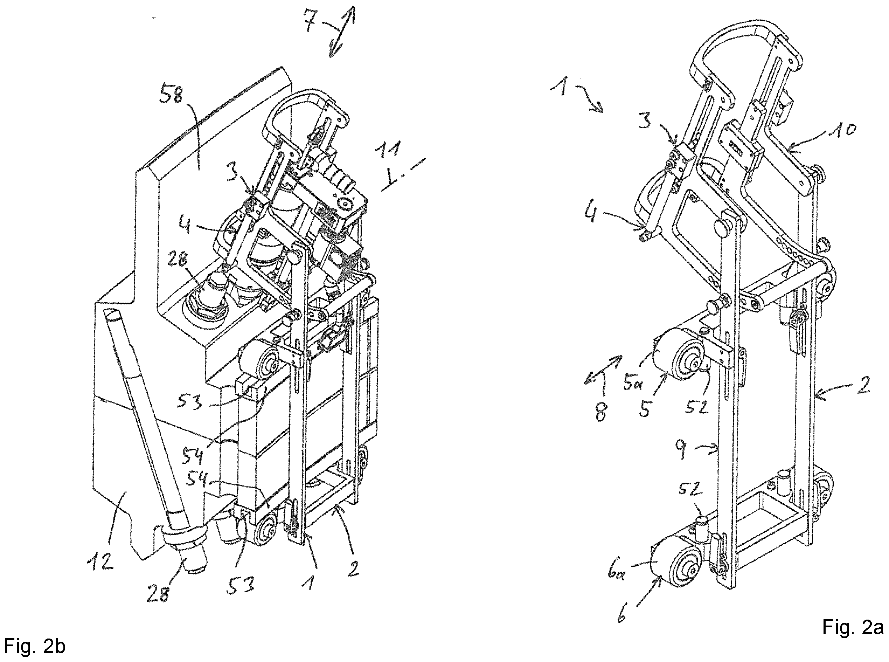

Die in den Figuren 2a bis 2d dargestellte Ausführungsform einer erfindungsgemäßen Hebe- und Transportvorrichtung 1 weist zusätzlich zu der Ausführungsform gemäß den Figuren 1a und 1b noch Führungsbolzen 52 auf, die zum Eingreifen in Führungsnuten 53 ausgelegt sind, die an der Flansch-Oberseite 19 bzw. -Unterseite 21 in Transportrichtung 8 verlaufen.

Die Führungsbolzen 52 sind im dargestellten Ausführungsbeispiel an den Querriegeln 22, 23 in der Nähe der Auflagerrollen 5a, 6a des ersten und zweiten Auflagers 5, 6 angebracht. Am ersten, oberen Querriegel 22 sind die Führungsbolzen 52 nach unten gerichtet zum Eingriff in eine nach oben offene Führungsnut 53 auf der Flansch-Oberseite 19. Am zweiten, unteren Querriegel 23 sind die Führungsbolzen 52 nach oben gerichtet zum Eingriff in eine nach unten offene Führungsnut 53 auf der Flansch-Unterseite 21.

Die Führungsnuten 53 können beispielsweise direkt in die Flansch-Oberseite 19 und in die Flansch-Unterseite 21 eingearbeitet sein, wobei die Auflagerrollen 5a, 6a wie bei der Ausführungsform gemäß den Figuren 1a und 1b unmittelbar auf der Flansch-Oberseite 19 bzw. - Unterseite 21 aufliegen.

Wie in den Figuren 2a bis 2d dargestellt, können die Führungsnuten 53 aber auch z. B. in Führungsschienen 54 ausgebildet sein, die auf der Flansch-Oberseite 19 und auf der Flansch-Unterseite 21 für das Montieren der Schraubverbindungen 28 vorübergehend angebracht sind. In diesem Fall liegen die Auflagerrollen 5a, 6a nicht mehr unmittelbar auf der Flansch-Oberseite 19 bzw. -Unterseite 21 auf, sondern auf den Führungsschienen 54.

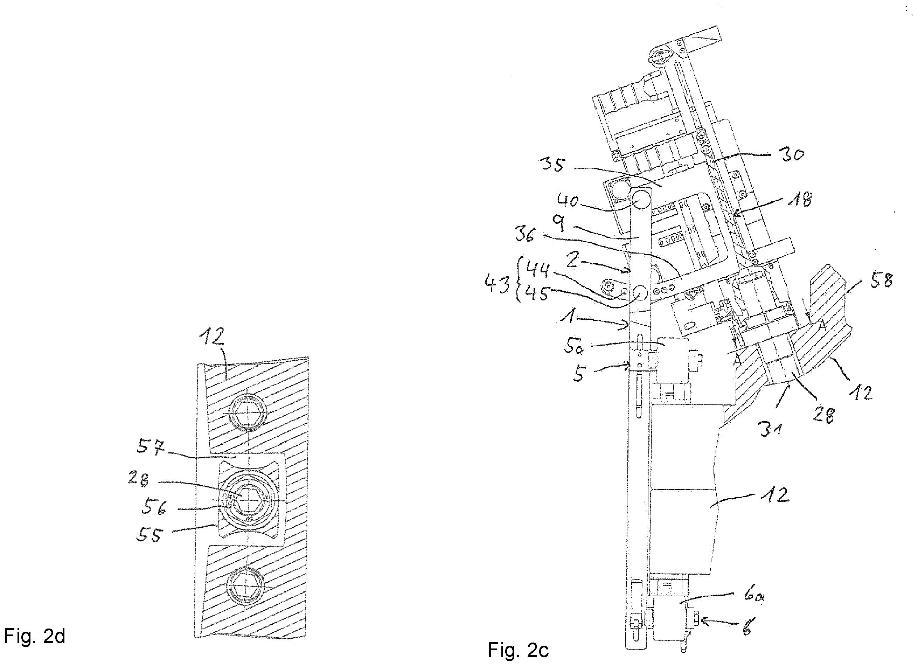

In Figur 2c ist die Hebe- und Transportvorrichtung 1 aus den Figuren 2a und 2b mit einem gehalterten Schraubwerkzeug 18 in Schraubstellung zum Anziehen einer Schraubverbindung 28 dargestellt. Die Rahmenteile 13, 14 des ersten Rahmenabschnitt 9 verlaufen vertikal entlang der Stirnseite 20 des Flansches 12. Der zweite Rahmenabschnitt 10 ist gegenüber den Rahmenteilen 13, 14 des ersten Rahmenabschnitts 9 um den Winkel verschwenkt, um den die Flansch-Oberseite 19 gegenüber der Horizontalen geneigt ist, so dass die Längsachse 30 des Schraubwerkzeugs 18 mit der Längsachse 31 der Schraubverbindung 28 übereinstimmt.

Der in Figur 2d dargestellte Schnitt A-A aus Figur 2c zeigt eine Stützhülse 55, die ein Bestandteil vom Unterteil des Schraubwerkzeuges ist, auf der Oberseite 19 des Schrägflansches 12 aufliegt, die Mutter 56 der anzuziehenden oder zu lösenden Schraubverbindung 28 umschließt und auf der sich das Schraubwerkzeug 18 beim Anziehen/Lösen der Schraubverbindung 28 gegenüber dem Flansch 12 auf der Flansch-Oberseite 19 abstützt. Die nicht-schraffierten Flächen 57 resultieren daraus, dass der in Figur 2c dargestellte Flanschausschnitt der Ausschnitt eines Ringflansches ist und auf Grund dessen Ringkrümmung ein ebener Schnitt durch die Stützhülse 55 oberhalb der Flansch-Oberseite 19 verläuft, bis er wieder den Flansch 12 schneidet.

Die in den Figuren 1a und 1b sowie 2a bis 2d dargestellten Ausführungsformen können durch Drehen um eine horizontale Achse, so dass der zweite Rahmenabschnitt 10 mit dem gehalterten Schraubwerkzeug 18 unter der Flansch-Unterseite 21 angeordnet ist, zum Anziehen oder Lösen von Schraubverbindungen 28 von der Flansch-Unterseite 21 aus eingesetzt werden. In diesem Fall wird aus dem früheren ersten Auflager dann das zweite Auflager 6, da es nunmehr an der Flansch-Unterseite 21 anliegt, und aus dem früheren zweiten Auflager das erste Auflager 5, da dieses nunmehr auf der Flansch-Oberseite 19 aufliegt. Aus den Gasdruckfedern 47 werden dann Gaszugfedern, die das Schraubwerkzeug 18 zum Anziehen/Lösen einer Schraubverbindung entgegen der Schwerkraft nach oben ziehen.

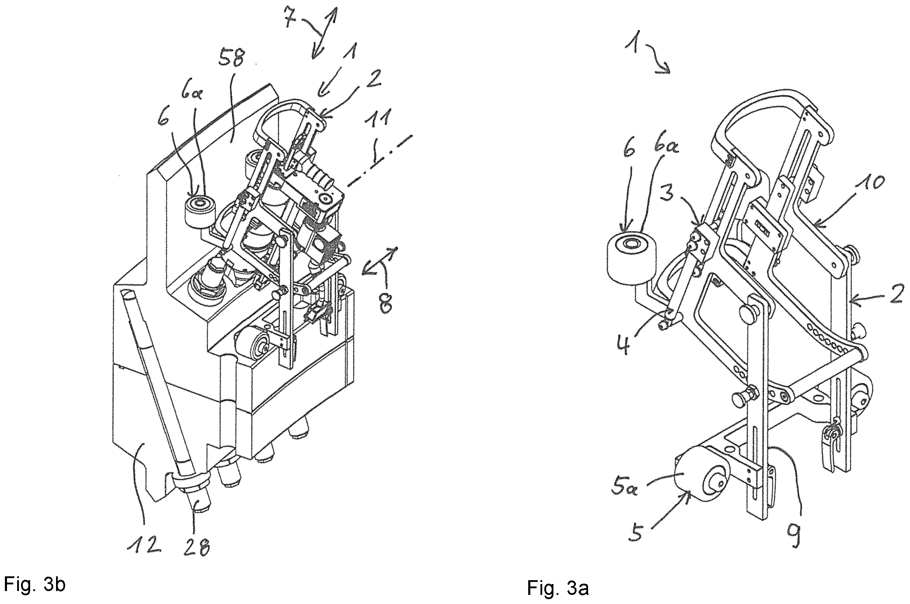

Bei dem In den Figuren 3a und 3b dargestellten Ausführungsbeispiel ist das zweite Auflager 6 am zweiten Rahmenabschnitt 10 angebracht und zur Anlage an eine vom Schrägflansch 12 aufgehende Bauteilwand 58 ausgelegt. Das zweite Auflager 6 ist auch hier aus zwei Auflagerrollen 6a gebildet; sie sind jeweils an einem Längssteg 34 eines Rahmenteils 15, 16 befestigt, und zwar an dem Ende 38, an dem auch der zweite Querschenkel 36 angeordnet ist. Die Auflagerrollen 6a sind dort verschiebbar oder verschwenkbar befestigt, damit ihre Stellung an unterschiedliche Verschwenkwinkel des zweiten Rahmenabschnitts 6 und/oder an die Neigung der Bauteilwand 58 gegenüber der Vertikalen angepasst werden kann.

Die ersten Auflager 5 sind weiterhin an den Rahmenteilen 13, 14 des ersten Rahmenabschnitts 9 in dergleichen Weise wie bei den Ausführungsbeispielen gemäß den Figuren 1a und 1b sowie 2a bis 2d befestigt, wobei sich die Rahmenteile 13, 14 nur soweit längs der Stirnseite 20 des Flansches 12 erstrecken, wie es zur verschieblichen Befestigung des ersten Auflagers 5 erforderlich ist.

Falls eine solche Hebe- und Transportvorrichtung 1 (auch) zum Anziehen oder Lösen von Schraubverbindungen 28 von der Flansch-Unterseite 21 aus eingesetzt wird, sind die Rahmenteile 13, 14 des ersten Rahmenabschnitts 9 dazu ausgelegt, sich längs der Flansch-Stirnseite 20 zu erstrecken. Die Rahmenteile 13, 14 weisen dann jeweils einen Längsschlitz auf, der sich längs der gesamten Höhe der Flansch-Stirnseite 20 erstreckt, damit das erste Auflager 5 soweit verschoben werden kann, dass es auch dann auf der Flansch-Oberseite 19 aufliegt, wenn die Hebe- und Transportvorrichtung 1 um 180° um eine horizontale Achse gedreht wird, damit der zweite Rahmenabschnitt 10 mit dem gehalterten Schraubwerkzeug 18 unter dem Flansch 12 angeordnet ist, um eine Schraubverbindung 28 von der Flansch-Unterseite 21 aus anzuziehen oder zu lösen.

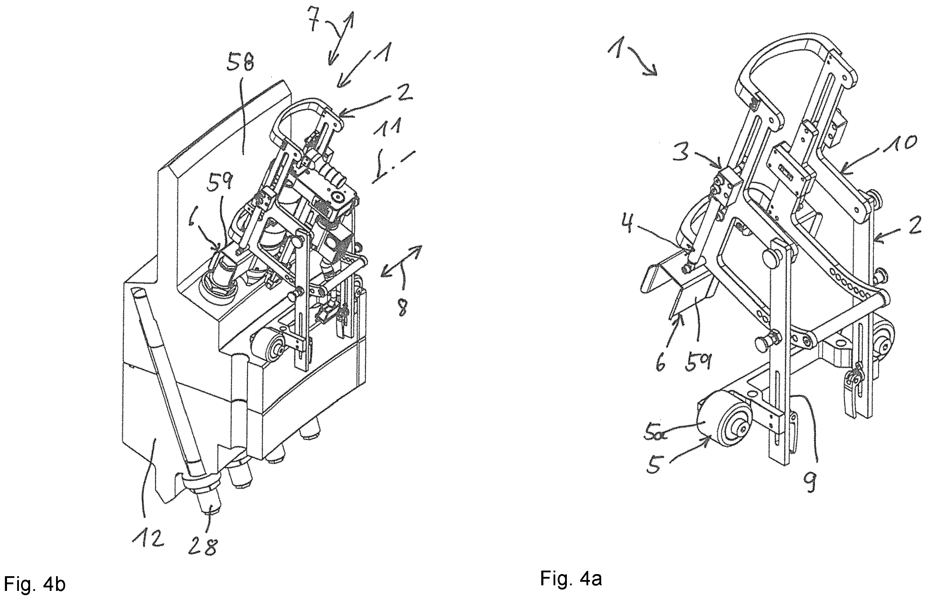

Bei der Ausführungsform gemäß den Figuren 4a und 4b ist gegenüber der Ausführungsform gemäß den Figuren 3a und 3b das zweite Auflager 6 als U-förmiges Element 59 ausgebildet, das dazu ausgelegt ist, die beiden beidseits der anzuziehenden oder zu lösenden Schraubverbindung 28 liegenden Schraubverbindungen zu übergreifen.

## Patentansprüche

1. Hebe- und Transportvorrichtung zum Heben einer Last und deren Transport quer zur Heberichtung (7), zur Verwendung beim Herstellen einer geschraubten Flanschverbindung, um ein Schraubwerkzeug (18) in eine Schraubstellung zu bringen, in der es mit einer anzuziehenden oder zu lösenden Schraubverbindung (28) in Eingriff steht, oder in eine Transportstellung, in der es außer Eingriff mit einer Schraubverbindung (28) und zur nächsten Schraubverbindung transportierbar ist, wobei der Flansch (12) sich in Transportrichtung (8) horizontal erstreckt, mit einem Rahmen (2), der sich zur Aufnahme und zum Heben einer Last um einen Lastraum (17) vorgegebener Größe herum erstreckt,
einer Halterungseinrichtung (3) zur Halterung der Last, wobei die Halterungseinrichtung (3) in Heberichtung (7) relativ zum Rahmen (2) bewegbar ist, und mit
einer Hubeinrichtung (4), die neben dem Lastraum (17) an dem Rahmen (2) befestigt und zum Heben und Senken der Halterungseinrichtung (3) mit daran befestigter Last eingerichtet ist, wobei der Rahmen (2) auf einem ersten und einem zweiten Auflager (5, 6) gelagert ist, deren Auflagerichtungen jeweils senkrecht zur Transportrichtung (8) verlaufen und die senkrecht zur Transportrichtung (8) zueinander einen Abstand aufweisen, wobei das erste Auflager (59 zur Anlage an der Flansch-Oberseite (19) ausgelegt ist, und
wobei zumindest das erste Auflager (5) Gleitelemente oder Auflagerrollen (5a) aufweist, die in Transportrichtung (8) verschiebbar bzw. abrollbar sind,
wobei der Rahmen (2) einen ersten Rahmenabschnitt (9) und einen zweiten Rahmenabschnitt (10) aufweist, wobei der zweite Rahmenabschnitt (10) am ersten Rahmenabschnitt (9) um eine Achse (11) verschwenkbar gelagert ist, die sich in Transportrichtung (8) erstreckt,
das erste Auflager (5) an dem ersten Rahmenabschnitt (9) befestigt ist, **dadurch gekennzeichnet, dass**
die Halterungseinrichtung (3) am zweiten Rahmenabschnitt (10) in Heberichtung (7) verschieblich und gegenüber dem zweiten Rahmenabschnitt (10) um eine in Transportrichtung (8) verlaufende Achse verschwenkfest gelagert ist, und
die Halterungseinrichtung (3) dazu eingerichtet ist, die Last gegenüber der Halterungseinrichtung (3) um eine in Transportrichtung (8) verlaufende Achse verschwenkfest zu haltern.

2. Hebe- und Transportvorrichtung nach Anspruch 1, **dadurch gekennzeichnet, dass** der erste und der zweite Rahmenabschnitt (9, 10) Arretierungselemente (44, 45) einer Arretierungsvorrichtung (43) aufweisen, mittels derer der zweite Rahmenabschnitt (10) in mindestens einem gewünschten Verschwenkwinkel gegenüber dem ersten Rahmenabschnitt (9) arretierbar ist.

3. Hebe- und Transportvorrichtung nach Anspruch 1 oder 2, **dadurch gekennzeichnet, dass** der erste Rahmenabschnitt (9) dazu ausgelegt ist, sich längs der Flansch-Stirnseite (20) zu erstrecken, und das zweite Auflager (6) am ersten Rahmenabschnitt (9) befestigt und zur Anlage an der Flansch-Unterseite (21) ausgelegt ist.

4. Hebe- und Transportvorrichtung nach Anspruch 3, **dadurch gekennzeichnet, dass** das erste und/oder das zweite Auflager (5, 6) zur Einstellung des gegenseitigen Abstands längs des ersten Rahmenabschnitts (9) verschiebbar und mittels Feststelleinrichtungen (25) fixierbar sind.

5. Hebe- und Transportvorrichtung nach Anspruch 1 oder 2, **dadurch gekennzeichnet, dass** das zweite Auflager (6) am zweiten Rahmenabschnitt (10) befestigt und zur Anlage oberhalb der Schraubverbindung (28) an eine vom Flansch (12) aufgehende Bauteilwand (58) ausgelegt ist.

6. Hebe- und Transportvorrichtung nach Anspruch 1 oder 2, **dadurch gekennzeichnet, dass** das zweite Auflager (6) am zweiten Rahmenabschnitt (10) befestigt und zum Übergreifen der Schraubverbindungen ausgelegt ist (59), die der in Bearbeitung befindlichen Schraubverbindung (28) benachbart sind.

7. Hebe- und Transportvorrichtung nach Anspruch 5 oder 6, **dadurch gekennzeichnet, dass** der erste Rahmenabschnitt (9) dazu ausgelegt ist, sich längs der Flansch-Stirnseite (20) zu erstrecken, und das erste Auflager (5) längs des ersten Rahmenabschnitts (9) von einer ersten Position, in der es angeordnet ist, wenn der zweite Rahmenabschnitt (10) oberhalb der Flansch-Oberseite (19) angeordnet ist, in eine zweite Position verschiebbar ist, in der es angeordnet ist, wenn der zweite Rahmenabschnitt (10) unterhalb der Flansch-Unterseite (21) angeordnet ist.

8. Hebe- und Transportvorrichtung nach einem der vorhergehenden Ansprüche, **dadurch gekennzeichnet, dass** das erste Auflager (5) dazu ausgelegt ist, auf einem horizontalen Flächenabschnitt (26) der Flansch-Oberseite (19) anzuliegen.

9. Hebe- und Transportvorrichtung nach Anspruch 3 oder 4, **dadurch gekennzeichnet, dass** das zweite Auflager (6) dazu ausgelegt ist, auf einem horizontalen Flächenabschnitt (27) der Flansch-Unterseite (21) anzuliegen.

10. Hebe- und Transportvorrichtung nach Anspruch 8 oder 9, **dadurch gekennzeichnet, dass** der horizontale Flächenabschnitt (26, 27) zwischen der Schraubverbindung (28) und der Flansch-Außenkante (29) angeordnet ist.

11. Hebe- und Transportvorrichtung nach einem der vorhergehenden Ansprüche, **dadurch gekennzeichnet, dass** der erste Rahmenabschnitt (9) Führungsbolzen (52) aufweist, die dazu eingerichtet sind, in Führungsnuten (53) einzugreifen, die an der Flansch-Oberseite (19) und/oder an der Flansch-Unterseite (21) in Transportrichtung (8) verlaufen.

12. Hebe- und Transportvorrichtung nach einem der vorhergehenden Ansprüche, **dadurch gekennzeichnet, dass** die Hubeinrichtung (4) am zweiten Rahmenabschnitt (10) befestigt ist.

## Claims

1. A lifting and transporting device for lifting a load and transporting the same transversely to the lifting direction (7), for use in manufacturing a screwed flange connection in order to bring a bolting tool (18) into a bolting position in which it is in engagement with a screw bolt connection (28) to be tightened or to be released, or into a transport position in which it is out of engagement with a screw bolt connection (28) and can be transported to the next screw bolt connection, wherein the flange (12) extends horizontally in the transport direction (8), comprising
a frame (2) which for picking up and lifting a load extends around a load space (17) of specified size,
a holding means (3) for holding the load, wherein the holding means (3) is movable relative to the frame (2) in the lifting direction (7), and comprising
a hoisting means (4) which is attached to the frame (2) beside the load space (17) and is adapted to lift and lower the holding means (3) with a load attached thereto, wherein the frame (2) is mounted on a first and a second support bearing (5, 6) whose support directions each extend perpendicularly to the transport direction (8) and which have a distance to each other perpendicularly to the transport direction (8), wherein the first support bearing (5) is designed for abutment against the flange upper side (19), and
wherein at least the first support bearing (5) includes sliding members or support rollers (5a) which can be shifted or rolled off in the transport direction (8),
wherein the frame (2) includes a first frame portion (9) and a second frame portion (10), wherein the second frame portion (10) is pivotally mounted on the first frame portion (9) about an axis (11) that extends in the transport direction (8), and the first support bearing (5) is attached to the first frame portion (9),
**characterized in that**
the holding means (3) is shiftably mounted on the second frame portion (10) in the lifting direction (7) and is non-pivotably mounted with respect to the second frame portion (10) about an axis extending in the transport direction (8), and
the holding means (3) is adapted to non-pivotably hold the load with respect to the holding means (3) about an axis extending in the transport direction (8).

2. The lifting and transporting device according to claim 1, **characterized in that** the first and the second frame portion (9, 10) include arresting elements (44, 45) of an arresting device (43), by means of which the second frame portion (10) can be arrested with respect to the first frame portion (9) at least at one desired pivot angle.

3. The lifting and transporting device according to claim 1 or 2, **characterized in that** the first frame portion (9) is designed to extend along the flange end face (20), and the second support bearing (6) is attached to the first frame portion (9) and designed for abutment against the flange underside (21).

4. The lifting and transporting device according to claim 3, **characterized in that** the first and/or the second support bearing (5, 6) can be shifted along the first frame portion (9) for setting the mutual distance and can be fixed by means of locking devices (25).

5. The lifting and transporting device according to claim 1 or 2, **characterized in that** the second support bearing (6) is attached to the second frame portion (10) and is designed for abutment above the screw bolt connection (28) against a component wall (58) rising from the flange (12).

6. The lifting and transporting device according to claim 1 or 2, **characterized in that** the second support bearing (6) is attached to the second frame portion (10) and designed for engaging over the screw bolt connections (59) that are adjacent to the screw bolt connection (28) being processed.

7. The lifting and transporting device according to claim 5 or 6, **characterized in that** the first frame portion (9) is designed to extend along the flange end face (20), and the first support bearing (5) can be shifted along the first frame portion (9) from a first position, in which it is arranged when the second frame portion (10) is arranged above the flange upper side (19), into a second position in which it is arranged when the second frame portion (10) is arranged below the flange underside (21).

8. The lifting and transporting device according to any of the preceding claims, **characterized in that** the first support bearing (5) is designed to rest on a horizontal surface portion (26) of the flange upper side (19).

9. The lifting and transporting device according to claim 3 or 4, **characterized in that** the second support bearing (6) is designed to rest on a horizontal surface portion (27) of the flange underside side (21).

10. The lifting and transporting device according to claim 8 or 9, **characterized in that** the horizontal surface portion (26, 27) is arranged between the screw bolt connection (28) and the flange outer edge (29).

11. The lifting and transporting device according to any of the preceding claims, **characterized in that** the first frame portion (9) includes guide pins (52), which are adapted to engage in guiding grooves (53) that extend in the transport direction (8) on the flange upper side (19) and/or on the flange underside (21).

12. The lifting and transporting device according to according to any of the preceding claims, **characterized in that** the hoisting means (4) is attached to the second frame portion (10).

## Revendications

1. Dispositif de levage et de transport pour lever une charge et pour la transporter transversalement à la direction de levage (7), destiné à être utilisé dans la réalisation d'un assemblage à bride vissé, afin d'amener un outil de vissage (18) dans une position de vissage dans laquelle il est en prise avec un assemblage vissé (28) à serrer ou à desserrer, ou dans une position de transport dans laquelle il est hors de prise avec un assemblage vissé (28) et peut être transporté jusqu'à l'assemblage vissé suivant, la bride (12) s'étendant horizontalement dans la direction de transport (8), comprenant
un cadre (2) qui s'étend autour d'un espace de charge (17) de taille prédéterminée, afin de recevoir et de lever une charge,
un moyen de retenue (3) pour retenir la charge, le moyen de retenue (3) étant mobile par rapport au cadre (2) dans la direction de levage (7), et comprenant
un moyen de levage (4) qui est fixé au cadre (2) à côté de l'espace de charge (17) et qui est conçu pour lever et abaisser le moyen de retenue (3) avec la charge fixée sur celui-ci,
le cadre (2) étant monté sur un premier et sur un second support (5, 6), dont les directions de support s'étendent chacune perpendiculairement à la direction de transport (8) et qui présentent une distance l'un de l'autre perpendiculairement à la direction de transport (8), le premier support (5) étant conçu pour s'appuyer sur la face supérieure de bride (19), et
au moins le premier support (5) présentant des éléments coulissants ou des rouleaux de support (5a) capables de coulisser ou de rouler dans la direction de transport (8),
dans lequel
le cadre (2) comporte une première partie de cadre (9) et une seconde partie de cadre (10), la seconde partie de cadre (10) étant montée sur la première partie de cadre (9) de manière à pouvoir pivoter autour d'un axe (11) qui s'étend dans la direction de transport (8),
le premier support (5) est fixé à la première partie de cadre (9),
**caractérisé en ce que**
le moyen de retenue (3) est monté sur la seconde partie de cadre (10) de manière à pouvoir se déplacer dans la direction de levage (7) et de manière à ne pas pouvoir pivoter par rapport à la seconde partie de cadre (10) autour d'un axe s'étendant dans la direction de transport (8), et
le moyen de retenue (3) est conçu pour retenir la charge de manière à ne pas pivoter par rapport au moyen de retenue (3) autour d'un axe s'étendant dans la direction de transport (8).

2. Dispositif de levage et de transport selon la revendication 1,
**caractérisé en ce que** les première et seconde parties de cadre (9, 10) présentent des éléments d'arrêt (44, 45) d'un dispositif d'arrêt (43), au moyen desquels la seconde partie de cadre (10) peut être arrêtée selon au moins un angle de pivotement souhaité par rapport à la première partie de cadre (9).

3. Dispositif de levage et de transport selon la revendication 1 ou 2,
**caractérisé en ce que** la première partie de cadre (9) est conçue pour s'étendre le long de la face frontale de bride (20), et le second support (6) est fixé à la première partie de cadre (9) et est conçu pour venir en appui contre la face inférieure de bride (21).

4. Dispositif de levage et de transport selon la revendication 3,
**caractérisé en ce que** le premier et/ou le second support (5, 6) peuvent être déplacés le long de la première partie de cadre (9) pour régler la distance mutuelle et peuvent être fixés à l'aide de moyens d'immobilisation (25).

5. Dispositif de levage et de transport selon la revendication 1 ou 2,
**caractérisé en ce que** le second support (6) est fixé à la seconde partie de cadre (10) et est conçu pour venir en appui, au-dessus de l'assemblage vissé (28), contre une paroi de composant (58) s'étendant vers le haut à partir de la bride (12).

6. Dispositif de levage et de transport selon la revendication 1 ou 2,
**caractérisé en ce que** le second support (6) est fixé à la seconde partie de cadre (10) et est conçu pour s'engager par-dessus les assemblages vissés (59) adjacents à l'assemblage vissé (28) qui est en cours de traitement.

7. Dispositif de levage et de transport selon la revendication 5 ou 6,
**caractérisé en ce que** la première partie de cadre (9) est conçue pour s'étendre le long de la face frontale de bride (20), et le premier support (5) peut être déplacé le long de la première partie de cadre (9) depuis une première position, dans laquelle il est placé lorsque la seconde partie de cadre (10) est placée au-dessus de la face supérieure de bride (19), jusqu'à une seconde position, dans laquelle il est placé lorsque la seconde partie de cadre (10) est placée au-dessous de la face inférieure de bride (21).

8. Dispositif de levage et de transport selon l'une des revendications précédentes,
**caractérisé en ce que** le premier support (5) est conçu pour s'appuyer sur une portion de surface horizontale (26) de la face supérieure de bride (19).

9. Dispositif de levage et de transport selon la revendication 3 ou 4,
**caractérisé en ce que** le second support (6) est conçu pour s'appuyer sur une portion de surface horizontale (27) de la face inférieure de bride (21).

10. Dispositif de levage et de transport selon la revendication 8 ou 9,
**caractérisé en ce que** la portion de surface horizontale (26, 27) est située entre l'assemblage vissé (28) et le bord extérieur de bride (29).

11. Dispositif de levage et de transport selon l'une des revendications précédentes,
**caractérisé en ce que** la première partie de cadre (9) comprend des tétons de guidage (52) conçus pour s'engager dans des rainures de guidage (53) qui s'étendent sur la face supérieure de bride (19) et/ou sur la face inférieure de bride (21) dans la direction de transport (8).

12. Dispositif de levage et de transport selon l'une des revendications précédentes,
**caractérisé en ce que** le moyen de levage (4) est fixé à la seconde partie de cadre (10).
